(19) Europäisches Patentamt / European Patent Office / Office européen des brevets

(11) **EP 4 768 660 A1**

(12) **EUROPEAN PATENT APPLICATION**

(43) Date of publication:
01.07.2026 Bulletin 2026/27

(21) Application number: 25219099.6

(22) Date of filing: 27.11.2025

(51) International Patent Classification (IPC):
D06P 5/30 (2006.01)     D06P 1/52 (2006.01)
B41M 5/00 (2006.01)     C09D 11/54 (2014.01)
D06P 1/647 (2006.01)     D06P 1/673 (2006.01)
D06P 5/00 (2006.01)

(52) Cooperative Patent Classification (CPC):
D06P 5/30; B41M 5/0017; C09D 11/54;
D06P 1/5221; D06P 1/525; D06P 1/647;
D06P 1/6735; D06P 5/002

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 29.11.2024 JP 2024208958

(71) Applicant: **Brother Kogyo Kabushiki Kaisha**
**Nagoya-shi, Aichi 467-8561 (JP)**

(72) Inventors:
• **YANAGITA, Haruki**
**Nagoya, 467-8562 (JP)**
• **SHIMIZU, Takahiro**
**Nagoya, 467-8562 (JP)**

(74) Representative: **J A Kemp LLP**
**80 Turnmill Street**
**London EC1M 5QU (GB)**

(54) **PRETREATMENT LIQUID, PRETREATMENT DEVICE, AND PRETREATMENT METHOD**

(57) A pretreatment liquid to be applied to a fabric in a region including an ink ejection region before an ink containing a pigment is ejected, the pretreatment liquid containing a resin, in which a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

*FIG. 1*

**Description**

REFERENCE TO RELATED APPLICATIONS

This application claims priority from Japanese Patent Application No. 2024-208958 filed on November 29, 2024. The entire content of the priority application is incorporated herein by reference.

BACKGROUND ART

The present disclosure relates to a pretreatment liquid, a pretreatment device, and a pretreatment method.

JP2020-63540A discloses a pretreatment liquid containing a resin, which is to be applied before a step of applying an ink containing a pigment.

SUMMARY

An image formed by applying an ink to a fabric to which a pretreatment liquid has been applied as disclosed in Patent Literature 1 may be peeled off by washing, and there is a problem in washing fastness.

Therefore, an object of the present disclosure is to provide a pretreatment liquid, a pretreatment device, and a pretreatment method that allow for improving washing fastness of an image formed on a fabric.

For achieving the object, the pretreatment liquid of the present disclosure is a pretreatment liquid to be applied to a fabric in a region including an ink ejection region before an ink containing a pigment is ejected, the pretreatment liquid containing a resin, in which a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

The pretreatment device of the present disclosure is a pretreatment device for applying a pretreatment liquid to be applied to a fabric in a region including an ink ejection region before an ink containing a pigment is ejected, the pretreatment device including a pretreatment unit configured to apply the pretreatment liquid to the fabric, in which, in the pretreatment liquid, a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

The pretreatment method of the present disclosure is a pretreatment method for applying a pretreatment liquid to be applied to a fabric in a region including an ink ejection region before an ink containing a pigment is ejected, the pretreatment method including a pretreatment step of applying the pretreatment liquid to the fabric, in which, in the pretreatment liquid, a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

The present disclosure allows for improving washing fastness of an image formed on a fabric.

BRIEF DESCRIPTION OF DRAWINGS

FIG. 1 is a schematic diagram showing an example of a configuration of a pretreatment device of the present disclosure.
FIG. 2 is a flowchart showing an example of steps in a pretreatment method of the present disclosure.
FIG. 3A shows an example of applying a pretreatment liquid in the pretreatment method of the present disclosure.
FIG. 3B shows another example of applying the pretreatment liquid in the pretreatment method of the present disclosure.
FIG. 4 is a graph showing a storage modulus (G') of a product obtained by centrifuging each of pretreatment liquids in Examples and Comparative Examples to separate an upper layer component and lower layer component and then drying the upper layer component.

DESCRIPTION

Embodiments of the present disclosure will be described below. The present disclosure is not limited to the following embodiments. In the following drawings, the same parts are denoted by the same reference numerals. The description of the embodiments can be incorporated by reference unless otherwise specified. Further, configurations of the embodiments can be combined unless otherwise specified.

EP 4 768 660 A1

<Pretreatment Liquid>

First, a pretreatment liquid according to the present disclosure will be described. The pretreatment liquid according to the present disclosure is a pretreatment liquid to be applied to a fabric in a region including an ink ejection region before an ink containing a pigment is ejected, and the pretreatment liquid contains a resin, in which a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less. The region including the ink ejection region may be, for example, the entire region of the ink ejection region or a partial region of the ink ejection region.

The centrifugation method is, for example, a method described in Examples to be described later. The upper layer component can also be referred to as, for example, a supernatant component, and can also be referred to as a separation product containing a resin to be described later. The condition of the centrifugation method is not limited, but for example, a rotational speed may be in a range of 1,000 to 15,000 rpm (revolutions per minute) and a centrifugation time may be in a range of 1 minute to 24 hours.

A method for drying the upper layer component is, for example, a method described in Examples to be described later. The condition of the method for drying the upper layer component is not limited, but for example, a heating temperature may be in a range of 50 to 100°C and a heating time may be in a range of 10 minutes to 6 hours. The method may be performed by an apparatus such as a dryer and a thermostatic chamber.

The storage modulus (G') at 25°C may be, for example, 0.5 kPa or more, 1 kPa or more, 1.5 kPa or more, or 1.7 kPa or more, and may be 85 kPa or less, 75 kPa or less, 50 kPa or less, 30 kPa or less, or 26 kPa or less. The present inventors have found that, in the case where the storage modulus (G') at 25°C is 95 kPa or less, an image formed on the fabric tends to be resistant to cracks due to an external force since the resin to be described later has high flexibility. This finding has not been shown in the related art including the above Patent Literature, and is uniquely found by the present inventors.

The storage modulus (G') at 160°C may be, for example, 3 kPa or more, 3.5 kPa or more, or 3.9 kPa or more, and may be 45 kPa or less, 30 kPa or less, 15 kPa or less, or 12 kPa or less. The inventors of the present disclosure have found that, in the case where the storage modulus (G') at 160°C is 47 kPa or less, when the pretreatment liquid according to the present disclosure is thermally dried, the resin to be described later is likely to be softened, and thus the resin sufficiently adheres to the fabric, and the image formed on the fabric tends to be less likely to peel off. This leads to improvement in washing fastness. In addition, the inventors of the present disclosure have found that, as the storage modulus (G') at 160°C is lower, the resin to be described later is likely to uniformly form a film on the fabric by the thermal drying, and thus color development of the image formed on the fabric can be improved. This finding has not been shown in the related art including the above Patent Literature, and is uniquely found by the present inventors.

The storage modulus (G') can be measured using, for example, a rheometer. In the present disclosure, the storage modulus means a storage modulus (G') in a shear mode unless otherwise specified. A method for measuring the storage modulus (G') is, for example, a method described in Examples to be described later.

The resin may be, for example, a resin contained as a component constituting a resin emulsion. The resin emulsion contains, for example, the resin and a dispersion medium (for example, water). The resin is not dissolved in the dispersion medium, but is dispersed with a specific particle diameter, for example.

Examples of the resin include an acrylic acid-based resin, a maleic acid-based ester resin, a vinyl acetate-based resin, a carbonate-based resin, a polycarbonate-based resin, a styrene-based resin, an ethylene-based resin, a polyethylene-based resin, a propylene-based resin, a polypropylene-based resin, a urethane-based resin, a polyurethane-based resin, and a copolymer resin thereof. As the resin, for example, a styrene-based resin, an acrylic acid-based resin, and a copolymer resin thereof are preferred. As the resin, one kind of resin may be used, or two or more kinds of resins may be used.

As the resin emulsion, for example, a commercially available product may be used. Examples of the commercially available product include "Mowinyl (registered trademark) 6770", "Mowinyl (registered trademark) 966A", "Mowinyl (registered trademark) 7320", "Mowinyl (registered trademark) 6963", and "Mowinyl (registered trademark) 6960" manufactured by JAPAN COATING RESIN CORPORATION, "VINYBLAN (registered trademark) GV-6181" and "VINYBLAN (registered trademark) GV-1002" manufactured by NISSIN CHEMICAL INDUSTRY CO., LTD., and "VONCOAT (registered trademark) SFC-55" and "VONCOAT (registered trademark) SFC-571" manufactured by DIC CORPORATION.

A content of the resin is, for example, 0.1 wt% to 30 wt%, 0.5 wt% to 20 wt%, or 1 wt% to 10 wt%, based on the total amount of all components contained in the pretreatment liquid taken as 100 wt%.

The pretreatment liquid may further contain, for example, at least one component selected from a polyvalent metal salt, an organic acid, an organic solvent, an amino acid, a surfactant, and water.

Examples of the polyvalent metal salt include a calcium salt, a magnesium salt, and an aluminum salt. Examples of the calcium salt include calcium chloride, calcium bromide, calcium iodide, calcium nitrite, calcium nitrate, calcium dihydrogen phosphate, calcium thiocyanate, calcium lactate, calcium fumarate, calcium citrate, and a hydrate thereof. Examples of the magnesium salt include magnesium chloride, magnesium bromide, magnesium iodide, magnesium sulfate, magnesium nitrate, and a hydrate thereof. Examples of the aluminum salt include aluminum chloride, aluminum bromide, aluminum sulfate, aluminum nitrate, aluminum acetate, and a hydrate thereof. As the polyvalent metal salt, one kind of polyvalent metal salt may be used, or two or more kinds of polyvalent metal salts may be used. The polyvalent metal salt preferably includes, for example, a calcium salt, a magnesium salt or both of them from the viewpoint of preventing discoloration of the fabric due to a pretreatment. In addition, as the polyvalent metal salt, for example, a calcium salt is preferably contained from the viewpoint of color development of an image after formation and the viewpoint of cost.

A content of the polyvalent metal salt is, for example, 1 wt% to 50 wt%, 5 wt% to 30 wt%, or 10 wt% to 25 wt%, based on the total amount of all components contained in the pretreatment liquid taken as 100 wt%.

Examples of the organic acid include but not limited to: saturated fatty acids such as formic acid, acetic acid, propionic acid, butyric acid, and valeric acid; hydroxy acids such as lactic acid, malic acid, and citric acid; aromatic carboxylic acids such as benzoic acid, phthalic acid, isophthalic acid, terephthalic acid, salicylic acid, and gallic acid; dicarboxylic acids such as oxalic acid, malonic acid, succinic acid, and fumaric acid; uronic acids such as glucuronic acid, galacturonic acid, and iduronic acid; and ascorbic acid. These organic acids may be, for example, a salt in which a cation is not a metal ion (for example, an ammonium salt or an amine salt).

The organic solvent and the amino acid may independently have a molecular weight of, for example, 90 or more, 100 or more, or 105 or more, 170 or more, 180 or more, 190 or more, or 200 or more. The organic solvent and the amino acid may independently have a molecular weight of, for example, 120 or less, 500 or less, or 400 or less. When the organic solvent is a polymer organic solvent, the molecular weight can be referred to as, for example, a number average molecular weight. When the molecular weight of the organic solvent and/or the amino acid is 100 or more, the boiling point thereof tends to be higher, and thus generation of smoke (vapor) due to evaporation of the organic solvent and/or the amino acid can be reduced when the pretreatment liquid is dried. Reducing the generation of the smoke allows for improving, for example, visibility of a work environment to improve workability of application process of a pretreatment liquid. In the present disclosure, the organic solvent and the amino acid function as, for example, a wetting agent.

Examples of the organic solvent include a glycol-based solvent and a glycerol-based solvent. Examples of the glycol-based solvent include ethylene glycol, diethylene glycol, a polyalkylene glycol, 1,3-propanediol, and a derivative thereof. The polyalkylene glycol may be, for example, a polyalkylene glycol having a molecular weight (number average molecular weight) of 200, 300, or 400. Examples of the glycerol-based solvent include glycerin, diglycerin, and a derivative thereof. As the organic solvent, one kind of organic solvent may be used, or two or more kinds of organic solvents may be used.

Examples of the polyalkylene glycol include polyethylene glycol, polypropylene glycol, polybutylene glycol, and polyoxyethylene polyoxypropylene glycol. Examples of a derivative of the polyalkylene glycol include polyglycerin, polyoxyethylene glycerin, polyethylene glycol monolauryl ether, polyethylene glycol monododecyl ether, and polyethylene glycol monomethyl ether.

Examples of the amino acid include a betaine. Examples of the betaine include trimethylglycine, carnitine, γ-butyrobetaine, taurobetaine, lysine betaine, and alanine betaine. Examples of the amino acid other than the betaine include glycine, alanine, aspartic acid, glutamic acid, lysine, arginine, and histidine.

A content of the organic solvent and the amino acid may be, for example, 15 wt% or more, and 25 wt% or less, or 20 wt% or less, based on the total amount of all components contained in the pretreatment liquid taken as 100 wt%. The content of the organic solvent and the amino acid is preferably, for example, 15 wt% or more from the viewpoint of the washing fastness after image formation. In addition, the content of the organic solvent and the amino acid is preferably, for example, 20 wt% or less from the viewpoint of drying efficiency.

When the pretreatment liquid contains at least one selected from the group consisting of an organic solvent and an amino acid, the organic solvent is an organic solvent having a molecular weight of 120 or less, an organic solvent having a molecular weight of 170 or more, or a mixture thereof, and the amino acid is an amino acid having a molecular weight of 120 or less, an amino acid having a molecular weight of 170 or more, or a mixture thereof, at least one selected from the group consisting of the organic solvent and the amino acid may be contained in an amount of, for example, 15 wt% or more based on the total amount of all components contained in the pretreatment liquid taken as 100 wt%. When at least one selected from the group consisting of the organic solvent and the amino acid is contained in an amount of 15 wt% or more, for example, scratch resistance of a portion in which the pretreatment liquid is applied is improved.

The reason why the scratch resistance is improved is thought as follows, for example. When the pretreatment liquid according to the present disclosure is dried, the resin component in the resin emulsion contained in the pretreatment liquid is melted by heat to form a film. At this time, the film is formed while containing the organic solvent and/or the amino acid contained in the pretreatment liquid. A film formed in a state of containing the organic solvent and/or the amino acid tends to be easily broken by scratches since a film strength decreases. This may be a cause of generation of scratch marks. On the other hand, the phenomenon that the organic solvent and/or the amino acid is contained means that the organic solvent and/or the amino acid penetrate into molecular structures of the resin. Therefore, the organic solvent and/or the amino acid having a lower molecular weight tend to physically penetrate into the molecular structures. In addition, the organic solvent and/or the amino acid move to an upper surface of the fabric without penetrating into the molecular structures due to evaporation of moisture accompanying the drying of the pretreatment liquid. Since the movement tends to occur more easily as the molecular weight is lower, when the molecular weight of the organic solvent and/or the amino acid is 120 or less, scratch marks are less likely to generate. In addition, when the molecular weight of the organic solvent and/or the amino acid is 170 or more, the organic solvent and/or the amino acid is less likely to penetrate into the molecular structures due to a large molecular size of the organic solvent and/or the amino acid, and thus scratch marks are less likely to generate. However, the above principle is merely a hypothesis, and the present disclosure is not limited to the above principle.

The pretreatment liquid according to the present disclosure may contain, for example, other organic solvents. Examples of the other organic solvents include a polyhydric alcohol except for the above glycol-based solvent and glycerol-based solvent, a polyhydric alcohol derivative except for the above glycol-based solvent and glycerol-based solvent, a sugar alcohol, a alcohol, an amide, a ketone, a ketoalcohol, a ether, a nitrogen-containing solvent other than the amide, a sulfur-containing solvent, propylene carbonate, ethylene carbonate, and 1,3-dimethyl-2-imidazolidinone.

Examples of the polyhydric alcohol except for the above glycol-based solvent and glycerol-based solvent include propylene glycol, butylene glycol, hexylene glycol, triethylene glycol, dipropylene glycol, tripropylene glycol, trimethylolpropane, 1,5-pentanediol, and 1,2,6-hexanetriol. Examples of the polyhydric alcohol derivative except for the above glycol-based solvent and glycerol-based solvent include ethylene glycol methyl ether, ethylene glycol ethyl ether, ethylene glycol-n-propyl ether, ethylene glycol-n-butyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. Examples of the sugar alcohol include sorbitol, mannitol, iditol, talitol, dulcitol, allodulcitol, xylitol, ribitol, arabitol, erythritol, threitol, isomalt, lactitol, volemitol, perseitol, and pentaerythritol. Examples of the alcohol include methyl alcohol, ethyl alcohol, n-propyl alcohol, isopropyl alcohol, n-butyl alcohol, sec-butyl alcohol, isobutyl alcohol, tert-butyl alcohol, and benzyl alcohol. Examples of the amide include dimethylformamide, dimethylacetamide, 2-pyrrolidone, N-methyl-2-pyrrolidone, and cyclohexylpyrrolidone. Examples of the ketone include acetone. Examples of the ketoalcohol include diacetone alcohol. Examples of the ether include tetrahydrofuran and dioxane. Examples of the nitrogen-containing solvent include triethanolamine, triethylamine and pyrridine. Examples of the sulfur-containing solvent include thiodiethanol, thiodiglycol, thiodiglycerol, sulfolane, and dimethyl sulfoxide.

Examples of the surfactant include a nonionic surfactant. Examples of the nonionic surfactant include an acetylene glycol-based surfactant. As the nonionic surfactant, a commercially available product may be used. Examples of the commercially available product include "OLFINE (registered trademark) E1004", "OLFINE (registered trademark) E1006", "OLFINE (registered trademark) E1010", "OLFINE (registered trademark) E1020", "OLFINE (registered trademark) EXP4001", "OLFINE (registered trademark) EXP4200", "OLFINE (registered trademark) EXP4123", "OLFINE (registered trademark) EXP4300", "OLFINE (registered trademark) PD-001", "OLFINE (registered trademark) PD-002W", "OLFINE (registered trademark) PD-005", "SURFYNOL (registered trademark) 420", "SURFYNOL (registered trademark) 440", "SURFYNOL (registered trademark) 465", and "SURFYNOL (registered trademark) 485" manufactured by NISSIN CHEMICAL INDUSTRY CO., LTD.

The surfactant may further include a surfactant other than the nonionic surfactant (for example, an anionic surfactant, a cationic surfactant, or an amphoteric surfactant).

A content of the surfactant may be, for example, 0.01 wt% or more, 0.02 wt% or more, 0.03 wt% or more, or 0.04 wt% or more, and may be 2 wt% or less, 1.5 wt% or less, 1 wt% or less, 0.8 wt% or less, 0.5 wt% or less, 0.3 wt% or less, or 0.1 wt% or less, based on the total amount of all components contained in the pretreatment liquid taken as 100 wt%.

Examples of the water include ion exchange water and pure water.

A content of the water is, for example, 10 wt% to 90 wt% or 20 wt% to 80 wt%, based on the total amount of all components contained in the pretreatment liquid taken as 100 wt%. The content of the water may be, for example, the balance except for other components.

The pretreatment liquid according to the present disclosure may further contain an additive such as a crosslinking agent, a pH adjuster, a viscosity adjuster, a preservative, and an antifungal agent, as necessary.

Examples of the pigment contained in the ink include carbon black, an inorganic pigment, and an organic pigment. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include: azo pigments such as azo lake, an insoluble azo pigment, a condensed azo pigment, and a chelate azo pigment; polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; dye lake pigments such as a basic dye lake pigment and an acid dye lake pigment; nitro pigments; nitroso pigments; and aniline black daylight fluorescent pigments. Other pigments may be used as long as the pigment can be dispersed in an aqueous phase. Specific examples of these pigments include: C.I. Pigment White 1, 4, 5, 6, 7, 18, 19, 20, 21, 22, 23, 24, 25, 26, 27, and 28; C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments.

The pigment may be, for example, one that is dispersed in a solvent using a resin dispersant (also referred to as a resin dispersion pigment). As the resin dispersant, for example, a general polymer dispersant (also referred to as a resin for pigment dispersion resin or a resin dispersant) may be used, and the resin dispersant may be prepared. In addition, in the ink according to the present disclosure, the pigment may be encapsulated with a polymer. As the resin dispersant, for example, those containing methacrylic acid, acrylic acid or both as a monomer can be used, and for example, a commercially available product may be used. The resin dispersant may be, for example, a block copolymer, a graft copolymer, or a random copolymer made of two or more monomers selected from the group consisting of hydrophobic monomers such as styrene, a styrene derivative, vinylnaphthalene, a vinylnaphthalene derivative, aliphatic alcohol esters of $\alpha,\beta$-ethylenically unsaturated carboxylic acids, or acrylic acid, an acrylic acid derivative, maleic acid, a maleic acid derivative, itaconic acid, an itaconic acid derivative, fumaric acid, and a fumaric acid derivative, or a salt thereof. Examples of the commercially available product include: "Joncryl (registered trademark) 611", "Joncryl (registered trademark) 60", "Joncryl (registered trademark) 586", "Joncryl (registered trademark) 687", "Joncryl (registered trademark) 63", and "Joncryl (registered trademark) HPD296" manufactured by JOHNSON POLYMER CO., LTD.; "Disperbyk 190" and "Disperbyk 191" manufactured by BYK; and "Solsperse 20000" and "Solsperse 27000" manufactured by ZENECA CORPORATION.

Examples of a method for dispersing the pigment using the resin for pigment dispersion include a method of dispersing the pigment using a dispersing device. The dispersing device used for dispersing the pigment is not limited as long as the dispersing device is a basic disperser, but examples thereof include a ball mill, a roll mill, and a sand mill (for example, a high-speed type sand mill).

The pigment may be a self-dispersion type pigment. The self-dispersion type pigment is a pigment prepared by, for example, introducing at least one of a hydrophilic functional group such as a carbonyl group, a hydroxy group, a carboxylic acid group, a sulfonic acid group, and a phosphoric acid group and a salt thereof into pigment particles by chemical bonding, either directly or through other groups, and thus, it can be dispersed in water without using a dispersant. As the self-dispersion type pigment, for example, pigments treated by methods described in JPH08-3498A, JP2000-513396A, JP2008-524400A, JP2009-515007A, and JP2011-515535A can be used. As a raw material of the self-dispersion type pigment, either an inorganic pigment or an organic pigment can be used. In addition, examples of the pigment suitable for the treatment include carbon black such as "MA8" and "MA100" manufactured by Mitsubishi Chemical Corporation. The self-dispersion type pigment may be, for example, a commercially available product. Examples of the commercially available product include: "CAB-O-JET (registered trademark) 200", "CAB-O-JET (registered trademark) 250C", "CAB-O-JET (registered trademark) 260M", "CAB-O-JET (registered trademark) 270Y", "CAB-O-JET (registered trademark) 300", "CAB-O-JET (registered trademark) 400", "CAB-O-JET (registered trademark) 450C", "CAB-O-JET (registered trademark) 465M", and "CAB-O-JET (registered trademark) 470Y" manufactured by CABOT CORPORATION; "BONJET (registered trademark) BLACK CW-2" and "BONJET (registered trademark) BLACK CW-3" manufactured by ORIENT CHEMICAL INDUSTRIES CO., LTD.; and "LIOJET (registered trademark) WD BLACK 002C" manufactured by TOYO INK CO., LTD.

As the pigment, one kind of pigment may be used, or two or more kinds of pigments may be used.

Examples of the fabric include a knitted fabric and a woven fabric. A material of the fabric may be a natural fiber or a synthetic fiber. Examples of the natural fiber include cotton and silk. Examples of the synthetic fiber include polyester, acrylic, rayon, urethane, and nylon. The material of the fabric may be a blended fabric obtained by mixing and spinning a plurality of kinds of fibers, such as cotton/polyester = 50%/50%.

<Pretreatment Device>

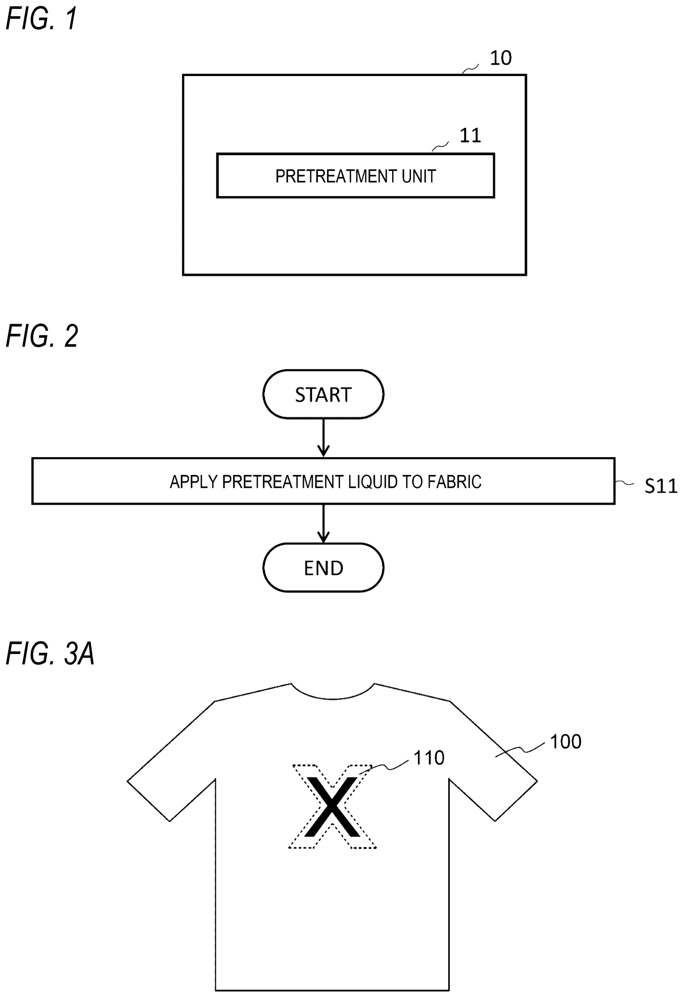

Next, a pretreatment device according to the present disclosure will be described. FIG. 1 shows an example of a configuration of the pretreatment device according to the present disclosure. As shown in FIG. 1, a pretreatment device 10 according to the present disclosure is a pretreatment device configured to apply a pretreatment liquid to be applied to the fabric in a region including an ink ejection region before an ink containing a pigment is ejected, and includes a pretreatment unit 11 configured to apply the pretreatment liquid to the fabric.

Examples of the pretreatment unit 11 include a liquid ejecting unit such as a liquid ejecting head, a spray, a stamp, a brush, and a roller.

The pretreatment liquid in the pretreatment device 10 according to the present disclosure is the same as the pretreatment liquid according to the present disclosure described above, and the description thereof can be incorporated.

The pretreatment device according to the present disclosure may further include, for example, a heat treatment unit. The heat treatment unit may be, for example, a commercially available heat press machine, an oven, or the like.

<Pretreatment Method>

Next, a pretreatment method according to the present disclosure will be described. FIG. 2 is a flowchart showing an example of steps in the pretreatment method according to the present disclosure. The pretreatment method according to the present disclosure is a pretreatment method of applying a pretreatment liquid to be applied to the fabric in a region including an ink ejection region before an ink containing a pigment is ejected, and includes a pretreatment step.

In the pretreatment step (S11), the pretreatment liquid is applied to the fabric. The pretreatment step may be performed by, for example, the pretreatment unit 11 in the pretreatment device 10 according to the present disclosure. In the pretreatment step, the pretreatment liquid can be applied by a method such as an inkjet method, a spray method, stamp coating, brush coating, roller coating, or a padding method.

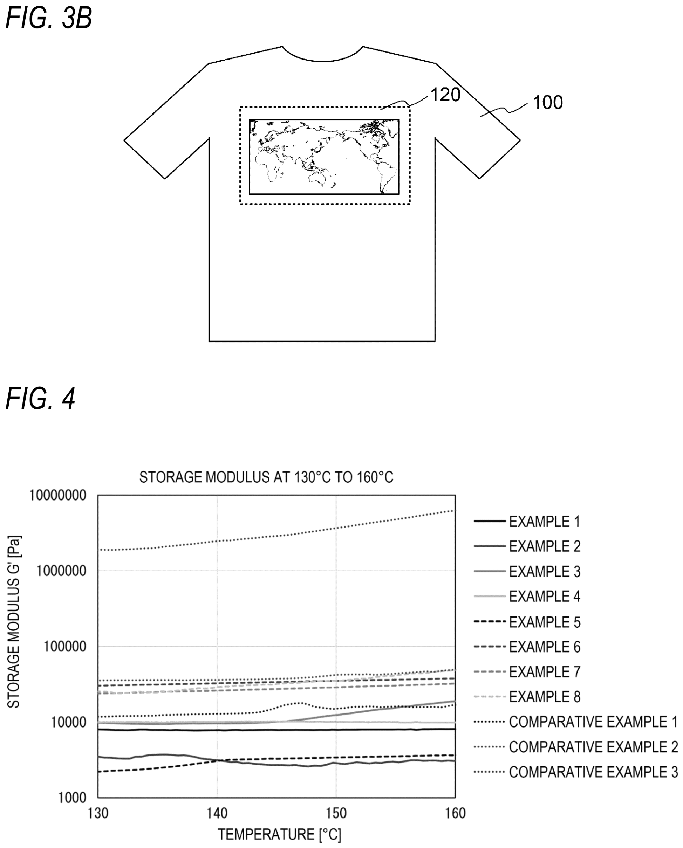

In the pretreatment step, the pretreatment liquid may be applied to the entire or a part of an image forming surface of the fabric. When the pretreatment liquid is applied to a part of the image forming surface, for example, a region in the image forming surface of the fabric that is approximately the same as the ink ejection region may be used as a pretreatment liquid application portion. When the pretreatment liquid is applied to a part of the image forming surface, a size of the pretreatment liquid application portion is preferably larger than that of a printing portion. FIG. 3A shows an example of applying the pretreatment liquid in the pretreatment method according to the present disclosure. For example, as shown in FIG. 3A, in the case of printing a character (X) on a fabric (T-shirt in this example) 100, it is preferable to apply the pretreatment liquid so as to form a pretreatment liquid application portion 110 having a line width larger than a line width of the character. FIG. 3B shows another example of applying the pretreatment liquid in the pretreatment method according to the present disclosure. As shown in FIG. 3B, in the case of printing a pattern on the fabric (T-shirt) 100, it is preferable to apply the pretreatment liquid so as to form a pretreatment liquid application portion 120 larger than the pattern.

In the pretreatment method according to the present disclosure, for example, a heat treatment step may be performed after the pretreatment step. The heat treatment step may be performed by using, for example, at least one of a heat press machine and an oven. The heat press machine and the oven may be, for example, commercially available products. A heat treatment temperature in the heat treatment step may be different between the case where the heat treatment is performed by using a heat press machine and the case where the heat treatment is performed by using an oven, for example. The heat treatment temperature in the case of using a heat press machine is used is, for example, 140°C to 200°C. The heat treatment temperature in the case of using an oven is used is, for example, 140°C to 180°C. The pretreatment method according to the present disclosure can be performed by using, for example, the pretreatment device 10 described above.

Next, Examples of the present disclosure will be described together with Comparative Examples. The present disclosure is not limited and restricted by the following Examples and Comparative Examples.

[Examples 1 to 8 and Comparative Examples 1 to 3]

The components in the pretreatment liquid composition (Table 2) were stirred and mixed to obtain pretreatment liquids in Examples 1 to 8 and Comparative Examples 1 and 2 shown in Table 2. Specifically, the polyvalent metal salt and water in Table 2 were blended in advance. Next, a surfactant, an organic solvent or an amino acid, a resin emulsion, and a preservative were added in this order to obtain the pretreatment liquid shown in Table 2. In addition, the pretreatment liquid in Comparative Example 3 is a commercially available pretreatment liquid and contains an acrylic resin (content is unknown) as a resin emulsion in addition to the components shown in Table 2. The amount of each component in Table 2 indicates the amount of the active component.

Using each of the pretreatment liquids in Examples 1 to 8 and Comparative Examples 1 to 3, an image was formed on a black T-shirt (product name: GILDAN (registered trademark) Ultra cotton manufactured by GILDAN, material: cotton 100%) by the following steps.

(Pretreatment Step)

Water was added to the pretreatment liquid prepared as shown in Table 2 to dilute the pretreatment liquid such that the volume was three times the original volume. Using an automatic pretreatment applicator (product name: THE CUBE, manufactured by PRINTSYSTEM), the pretreatment liquid after dilution was applied to the image forming surface of the T-shirt (24 mg/cm$^2$).

(Heat Treatment Step (1))

The pretreatment liquid application portion of the T-shirt after the pretreatment step was subjected to pretreatment fixing using a heat press machine (product name: AIR FUSION IQ (registered trademark) manufactured by STAHLS' Hotronix). A heat treatment was performed at a set temperature of 185°C and a set pressure of 31 psi for 35 seconds.

(Image Printing Step)

An image was printed by ejecting a white ink ("W ink" in Table 2) onto the T-shirt to which the pretreatment liquid was applied using an inkjet printer (product name: GTX (registered trademark) pro, manufactured by Brother Industries, Ltd.). As the ink, white (product name: GCX-4W, manufactured by Brother Industries, Ltd.) was used. The amount of the white ink was as shown in Table 2.

(Heat Treatment Step (2))

After the image printing step, the ink was thermally fixed to the printing portion of the T-shirt using a drying machine (product name: Drawer Drying Cabinet, product number: DDC-3A, manufactured by ADELCO) set to 160°C. A heating time in the thermal fixing was 3.5 minutes.

In Examples, an evaluation sample was prepared by each step, but this is merely an example, and the preparation method is not limited to the above. For example, the order of the steps may be changed as appropriate. The evaluation result to be described later is not changed by changing the method of preparing the evaluation sample.

The pretreatment liquids in Examples 1 to 8 and Comparative Examples 1 to 3 were subjected to (a) Evaluation of storage modulus (G'), (b) Evaluation of Color Development, (c) Evaluation of Washing Fastness, (d) Evaluation of Smoke Generation, and (e) Evaluation of Scratch Resistance by the following methods.

(a) Evaluation of storage modulus (G')

The pretreatment liquid prepared as described above was transferred to a centrifuge tube and centrifuged under conditions of 12,000 rpm using a centrifuge (product name: KUBOTA 3200 manufactured by KUBOTA CORPORATION). Centrifugation was performed until a volume ratio of an upper layer component (supernatant liquid) to a lower layer component (precipitate) was about 1:1. After the centrifugation, the upper layer component was transferred to any container and dried at 80°C for 3 hours using a small environment tester (model: SH-241 manufactured by Espec Corporation) to obtain a dried product. The upper layer component after the centrifugation contains a component lighter than the lower layer component. The obtained dried product was punched with a φ8 mm leather punch to obtain an evaluation sample. The storage modulus (G') of the obtained dried product at 25°C and 160°C was measured using a rheometer (product name: Discovery HR 20 manufactured by TA Instruments). The measurement conditions for the storage modulus (G') are as follows.

· Geometry: φ8 mm parallel plate
· Geometry gap: 100 $\mu$m to 1,000 $\mu$m
· Gap adjustment during measurement: no
· Measurement frequency: 1 Hz
· Measurement strain: 1%
· Axial force adjustment: no

Here, the storage modulus (G') measured after holding the obtained dried product at 25°C for 5 minutes was defined as "storage modulus (G') at 25°C". In addition, the obtained dried product was held at 25°C for 5 minutes, then heated to 160°C at 5°C/min, and then held at 160°C for 5 minutes, and the storage modulus was measured. The measured storage modulus (G') was defined as "storage modulus (G') at 160°C". In Examples, the centrifugation was performed until the volume ratio of the upper layer component (supernatant liquid) to the lower layer component (precipitate) is about 1:1, but the present disclosure is not limited thereto, and for example, the upper layer component separated to have any volume ratio may be used for the evaluation sample of the storage modulus (G').

As to be described later, the result that Examples 1 to 8 had better washing fastness than Comparative Examples 1 to 3 means that the storage modulus (G') of the product obtained by centrifuging the pretreatment liquid to separate an upper layer component and lower layer component and then drying the upper layer component in a specific range at room temperature and in a specific range even at a high temperature contributes to improvement of washing fastness. This shows that the storage modulus (G') at a high temperature is not limited to a specific temperature. FIG. 4 and Table 1 show the storage modulus (G') at each temperature when the temperature of the product obtained by centrifuging each of the pretreatment liquids of Examples 1 to 8 and Comparative Examples 1 to 3 to separate an upper layer component and lower layer component and then drying the upper layer component was increased from 130°C to 160°C under the above temperature increase condition. From the results of FIG. 4 and Table 1, it has been found that the numerical range of the storage modulus (G') in the present disclosure may be set based on the storage modulus (G') at each temperature from 130°C to 160°C. That is, in the present disclosure, the "storage modulus (G') at 160°C" is exemplified, but it can be seen that, for example, the storage modulus (G') at any temperature of 130°C to 160°C satisfies the numerical range of the storage modulus (G') in the present disclosure. Therefore, it is understood that even when a temperature of lower than 160°C is applied to the pretreatment liquid in the heat treatment step, as long as the storage modulus (G') at 160°C is within the numerical range of the present disclosure, such a pretreatment liquid is included in the technical range of the present disclosure.

[Table 1]

| | | Example | | | | | | | | Comparative Example | | |
|---|---|---|---|---|---|---|---|---|---|---|---|---|
| | | 1 | 2 | 3 | 4 | 5 | 6 | 7 | 8 | 1 | 2 | 3 |
| Storage modulus G' [Pa] | 130°C (*) | 7992 | 3485 | 9798 | 9977 | 2207 | 30355 | 23829 | 25448 | 11752 | 35270 | 1897850 |
| | 140°C (*) | 7842 | 3118 | 9650 | 10029 | 3069 | 32566 | 26132 | 28935 | 12876 | 36057 | 2472450 |
| | 150°C (*) | 7886 | 2838 | 12462 | 10041 | 3406 | 35158 | 28873 | 35176 | 15123 | 42239 | 3709110 |
| | 160°C | 10146 | 3712 | 26449 | 11636 | 3976 | 46507 | 40312 | 46564 | 26718 | 60111 | 116772 |
| *data in temperature increase process to 160°C | | | | | | | | | | | | |

(b) Evaluation of Color Development

Using each of the pretreatment liquids in Examples 1 to 8 and Comparative Examples 1 to 3, an evaluation sample was obtained by the procedure from the "pretreatment step" to the "Heating Treatment Step (2)" described above. An L* value of the printing portion of the T-shirt of the evaluation sample on which the image was formed was measured using a CIE 1976 L*a*b* color space scale colorimeter (manufactured by X-Rite PANTONE, product name: X-Rite eXact).

(c) Evaluation of Washing Fastness

The T-shirt on which the image was formed was washed with a general household washing detergent using a washing and drying machine (product number: MWI74140JB2, manufactured by MAYTAG Corporation) under the conditions of a COTTON mode and a water temperature of 60°C, and then dried using a clothes drying machine (product number: NH-D603, manufactured by Panasonic Corporation) in a standard mode and a "strong" heater mode. The brightness ($L_i^*$ and $L_2^*$) of an ink coating film (image) before and after the washing was measured using a CIE 1976 L*a*b* color space scale colorimeter (manufactured by X-Rite PANTONE, product name: X-Rite eXact). From the measured brightness, $\Delta L^*$ was calculated based on the following equation (1), and this was used as an index of the washing fastness. The higher washing fastness equates to the smaller value of $\Delta L^*$.

$$\Delta L^* = |L_2^* - L_1^*| \qquad (1)$$

$L_1^*$: brightness of ink coating film before washing
$L_2^*$: brightness of ink coating film after washing

(d) Evaluation of Smoke Generation

The pretreatment liquid prepared as described above was applied to a fabric by spray (24 mg/cm$^2$). Thereafter, the fabric to which the pretreatment liquid was applied was heated at 200°C using a hot plate (product number: PMC-720, manufactured by Iuchi Seieido Co., Ltd.). Between 2 minutes to 2.5 minutes after the start of heating, the presence or absence of smoke generation from the region to which the pretreatment liquid was applied was observed and evaluated based on the following evaluation criteria.

Evaluation Criteria for Smoke Generation

A: no smoke was observed.
B: smoke was observed. "Smoke was observed" means that smoke was observed multiple times between 2 minutes to 2.5 minutes after the start of heating, and each interval between the observations was shorter than 3 seconds.

(e) Evaluation of Scratch Resistance

For the T-shirt after the heat treatment step (1) described above, the portion to which the pretreatment liquid was applied was rubbed with a metal plate while applying a load of 0.5 kgf $\pm$ 0.1 kgf at an angle of 45° $\pm$ 15° with respect to the surface of the T-shirt, and the scratch resistance was evaluated based on the following evaluation criteria. The metal plate used had a width of 15 mm and a thickness of 0.7 mm.

Evaluation Criteria for Scratch Resistance

A: no scratch mark was observed.
B: a scratch mark was observed.

The compositions and evaluation results of the pretreatment liquids in Examples 1 to 8 and Comparative Examples 1 to 3 are shown in Table 2.

[Table 2]

| Material name | | Molecular weight | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|
| Polyvalent metal salt | Calcium nitrate tetrahydrate | | 18 | 18 | 18 | 18 | 18 | 18 | 18 | 18 | 18 | 18 | 18 |
| Resin emulsion | Mowinyl® 6770 (*1) | | 6.8 | 6.8 | 6.8 | 6.8 | | 6.8 | 6.8 | 6.8 | 6.8 | 6.8 | |
| | Mowinyl® 966A (*2) | | | | | | 6.8 | | | | | | |
| | Diglycerin | 166.2 | 10 | 10 | | | | | | | | | |
| | Polyethylene glycol 200 | 200 (average) | 10 | | 15 | 15 | 15 | | | | | | |
| | Polyethylene glycol 300 | 300 (average) | | | | 5 | 5 | | | 10 | | | |
| | Polyethylene glycol 400 | 400 (average) | | 10 | | | | | | | | | |
| Organic solvent | Glycerin | 92.1 | | | | | | | 20 | | | | |
| | Ethylene glycol | 62.1 | | | | | | | | | 15 | | |
| | Diethylene glycol | 106.1 | | | | | | 15 | | | | | |
| | 1,3-Propanediol | 76.1 | | | | | | | | | | 15 | |
| Amino acid | Trimethylglycine (betaine) | 117.1 | | | | | | | | 5 | | | 10 |
| Surfactant | OLFINE® EXP4300 (*3) | | 0.8 | 0.8 | 0.8 | 0.8 | 0.8 | 0.8 | 0.8 | 0.8 | 0.8 | 0.8 | |
| Preservative | Proxel GXL(S) (*4) | | 0.03 | 0.03 | 0.03 | 0.03 | 0.03 | 0.03 | 0.03 | 0.03 | 0.03 | 0.03 | |
| Water | | | Bal. | Bal. | Bal. | Bal. | Bal. | Bal. | Bal. | Bal. | Bal. | Bal. | Bal. |
| Storage modulus G' [Pa] | 25°C | | 94829 | 88751 | 21547 | 25190 | 1760 | 982 | 535 | 9289 | 132098 | 29198 | 23948 |
| | 160°C | | 10146 | 3712 | 26449 | 11636 | 3976 | 46507 | 40312 | 46564 | 26718 | 60111 | 116772 |
| Color development | L* (W ink amount: 21.4 mg/cm²) | | 90.8 | 88.5 | 88.7 | 92.1 | 92.2 | 89.1 | 90.3 | 90.2 | 87.3 | 89.3 | 86.6 |

(continued)

| Material name | | Example | | | | | | | | Comparative Example | | |
|---|---|---|---|---|---|---|---|---|---|---|---|---|
| | Molecular weight | 1 | 2 | 3 | 4 | 5 | 6 | 7 | 8 | 1 | 2 | 3 |
| Washing fastness | $\Delta L^*$ before and after washing (W ink amount: 2.7 mg/cm$^2$) | 13.1 | 11.2 | 15.6 | 15.1 | 12.2 | 16.8 | 14.9 | 12.8 | 22.3 | 19.2 | 22.5 |
| | $\Delta L^*$ before and after washing (W ink amount: 16.0 mg/cm$^2$) | 2.5 | 3.4 | 3.1 | 1.4 | 1.7 | 3.6 | 3.2 | 2.3 | 5.3 | 3.5 | 6.7 |
| Smoke | Evaluation using hot plate | A | A | A | A | A | A | B | A | A | A | A |
| Coating mark | Presence or absence of scratch mark | B | B | A | A | A | A | A | A | A | A | A |

*1: acrylic resin emulsion, manufactured by JAPAN COATING RESIN CORPORATION.
*2: styrene/acrylic resin emulsion, manufactured by JAPAN COATING RESIN CORPORATION.
*3: acetylene glycol-based surfactant, manufactured by NISSIN CHEMICAL INDUSTRY CO., LTD.
*4: manufactured by arxada JAPAN

As shown in Table 2, in Examples 1 to 8, the washing fastness was good under both conditions where the ink application amount is large and small. That is, the pretreatment liquid in which the product obtained by centrifuging the pretreatment liquid to separate an upper layer component and lower layer component and then drying the upper layer component had a storage modulus (G') at 25°C of 95 kPa or less and a storage modulus (G') at 160°C of 47 kPa or less had good washing fastness in all Examples. In addition, in Examples 1 to 6 and 8, the molecular weights of the organic solvent and/or the amino acid were 100 or more, the generation of smoke was reduced as compared with other Examples. Further, in Examples 3 to 6 and 8, the molecular weight of the organic solvent and/or the amino acid were 120 or less or 170 or more, and at least one selected from the group consisting of the organic solvent and the amino acid was contained in an amount of 15 wt% or more, based on the total amount of all components contained in the pretreatment liquid taken as 100 wt%, and thus the scratch resistance was better than that in the other Examples. In addition, in Examples 4 and 5, the storage modulus (G') at 25°C of the product obtained by centrifuging the pretreatment liquid to separate an upper layer component and lower layer component and then drying the upper layer component was 95 kPa or less and the storage modulus (G') at 160°C thereof was 47 kPa or less, and thus, the color development of the image formed on the fabric was better than that in the other Examples. On the other hand, in Comparative Examples 1 to 3, the washing fastness was poor in at least one of the conditions where the ink application amount was large or small.

A part or all of the present disclosure may be described as the following appendixes, but the present disclosure is not limited thereto.

(Appendix 1) A pretreatment liquid to be applied to a fabric in a region including an ink ejection region before an ink containing a pigment is ejected, the pretreatment liquid containing a resin, in which, a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

(Appendix 2) The pretreatment liquid according to Appendix 1, further containing at least one selected from the group consisting of an organic solvent and an amino acid, in which the organic solvent and the amino acid have a molecular weight of 100 or more.

(Appendix 3) The pretreatment liquid according to Appendix 1, further containing at least one selected from the group consisting of an organic solvent and an amino acid, in which the organic solvent is an organic solvent having a molecular weight of 120 or less, an organic solvent having a molecular weight of 170 or more, or a mixture thereof, the amino acid is an amino acid having a molecular weight of 120 or less, an amino acid having a molecular weight of 170 or more, or a mixture thereof, and at least one selected from the group consisting of the organic solvent and the amino acid is contained in an amount of 15 wt% or more based on the total amount of all components contained in the pretreatment liquid taken as 100 wt%.

(Appendix 4) The pretreatment liquid according to Appendix 1, in which the product has a storage modulus (G') at 25°C of 26 kPa or less and a storage modulus (G') at 160°C of 12 kPa or less.

(Appendix 5) A pretreatment device for applying a pretreatment liquid to be applied to a fabric in a region including an ink ejection region before an ink containing a pigment is ejected, the pretreatment device including a pretreatment unit configured to apply the pretreatment liquid to the fabric, in which, in the pretreatment liquid, a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

(Appendix 6) A pretreatment method for applying a pretreatment liquid to be applied to a fabric in a region including an ink ejection region before an ink containing a pigment is ejected, the pretreatment method including a pretreatment step of applying the pretreatment liquid to the fabric, in which, in the pretreatment liquid, a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

As described above, the pretreatment liquid according to the present disclosure allows for improving the washing fastness of the image formed on the fabric. The pretreatment liquid according to the present disclosure is not limited in application, and may be widely applied to a pretreatment before image formation on various fabrics.

## Claims

1. A pretreatment liquid to be applied to a fabric in a region including an ink ejection region before an ink containing a pigment is ejected, the pretreatment liquid comprising:

   a resin, wherein,
   a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

2. The pretreatment liquid according to claim 1, further comprising:

at least one selected from the group consisting of an organic solvent and an amino acid, wherein the organic solvent and the amino acid have a molecular weight of 100 or more.

3. The pretreatment liquid according to claim 1, further comprising:

at least one selected from the group consisting of an organic solvent and an amino acid, wherein the organic solvent is an organic solvent having a molecular weight of 120 or less, an organic solvent having a molecular weight of 170 or more, or a mixture thereof, the amino acid is an amino acid having a molecular weight of 120 or less, an amino acid having a molecular weight of 170 or more, or a mixture thereof, and at least one selected from the group consisting of the organic solvent and the amino acid is contained in an amount of 15 wt% or more based on the total amount of all components contained in the pretreatment liquid taken as 100 wt%.

4. The pretreatment liquid according to any one of claims 1 to 3, wherein the product has a storage modulus (G') at 25°C of 26 kPa or less and a storage modulus (G') at 160°C of 12 kPa or less.

5. A pretreatment device for applying a pretreatment liquid to be applied to a fabric in a region including an ink ejection region before an ink containing a pigment is ejected, the pretreatment device comprising:

a pretreatment unit configured to apply the pretreatment liquid to the fabric, wherein in the pretreatment liquid, a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

6. A pretreatment method for applying a pretreatment liquid to be applied to a fabric in a region including an ink ejection region before an ink containing a pigment is ejected, the pretreatment method comprising:

a pretreatment step of applying the pretreatment liquid to the fabric, wherein in the pretreatment liquid, a product obtained by centrifuging the pretreatment liquid to separate an upper layer component and lower layer component and then drying the upper layer component has a storage modulus (G') at 25°C of 95 kPa or less and a storage modulus (G') at 160°C of 47 kPa or less.

*FIG. 1*

*FIG. 2*

*FIG. 3A*

FIG. 3B

FIG. 4

Europäisches
Patentamt
European
Patent Office
Office européen
des brevets

**EUROPEAN SEARCH REPORT**

Application Number

EP 25 21 9099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/284419 A1 (KOBASHI TOSHIYUKI [JP] ET AL) 19 September 2019 (2019-09-19) * paragraphs [0093], [0178], [0180], [0193], [0255]; tables 3,4 * ----- | 1-6 | INV. D06P5/30 D06P1/52 B41M5/00 C09D11/54 |
| X | JP 2023 139601 A (RICOH CO LTD) 4 October 2023 (2023-10-04) * paragraphs [0027], [0121]; tables 1,2 * ----- | 1-6 | D06P1/647 D06P1/673 D06P5/00 |

TECHNICAL FIELDS
SEARCHED        (IPC)

D06P
B41M
C09D

The present search report has been drawn up for all claims

| Place of search | Date of completion of the search | Examiner |
|---|---|---|
| The Hague | 26 May 2026 | Robert, Dominique |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 9099

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2026

| Patent document cited in search report | Publication date | Patent family member(s) | | Publication date |
|---|---|---|---|---|
| US 2019284419 A1 | 19-09-2019 | JP | 7040183 B2 | 23-03-2022 |
| | | JP | 2019163380 A | 26-09-2019 |
| | | US | 2019284419 A1 | 19-09-2019 |
| JP 2023139601 A | 04-10-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024208958 A
- JP 2020063540 A
- JP H083498 A
- JP 2000513396 A
- JP 2008524400 A
- JP 2009515007 A
- JP 2011515535 A